# EUROPÄISCHE PATENTSCHRIFT

(11) **EP 1 955 802 B1**
(45) Veröffentlichungstag und Bekanntmachung des Hinweises auf die Patenterteilung: **25.07.2012**
(21) Anmeldenummer: 07023709.4
(22) Anmeldetag: 07.12.2007
(51) Int. Cl.: B23D 49/16, B23D 51/16

(54) **Hubsäge, insbesondere Stichsäge**
Hacksaw, in particular jig saw
Scie à métaux, en particulier scie sauteuse

(30) Priorität: 09.02.2007 DE 102007006482
(43) Veröffentlichungstag der Anmeldung: 13.08.2008
(73) Patentinhaber: Festool GmbH, 73240 Wendlingen (DE)
(72) Erfinder: Reuss, Torsten, 73265 Dettingen unter Teck (DE); Kretschmar, Volker, 73257 Köngen (DE)
(74) Vertreter: Bregenzer, Michael

(56) Entgegenhaltungen:
- DE-A1- 4 121 989
- US-A- 4 628 605

## Beschreibung

Die Erfindung betrifft eine Hubsäge, insbesondere Stichsäge, mit einer Antriebseinrichtung zum Antreiben eines Sägeblattes gemäß dem Oberbegriff des Anspruchs 1.

Eine derartige Hubsäge geht aus US 4628605 hervor.

Bei den beispielsweise aus der DE 41 21 989 A1 bekannten Hubsägen dieser Art sind die Führungselemente feststehend an der Hubsäge angeordnet, sodass beim Betrieb das Sägeblatt eine der Pendelkomponenten der Sägeblattbewegung entsprechende Relativbewegung zu den Führungselementen ausführt.

Ausgehend hiervon liegt der vorliegenden Erfindung die Aufgabe zugrunde, eine Hubsäge der eingangs genannten Art zu schaffen, bei der das Sägeblatt durch die Führungselemente möglichst stabil und verschleißarm geführt wird.

Diese Aufgabe wird durch eine Hubsäge gemäß der technischen Lehre des Anspruchs 1 gelöst.

Auf diese Weise führen das Sägeblatt und der Führungshalter und somit auch die Führungselemente eine synchrone Pendelbewegung aus, sodass lediglich eine lineare Relativbewegung zwischen dem Sägeblatt und den Führungselementen in Sägeblatt-Längsrichtung stattfindet. Daher bleibt der Abstand zwischen der Sägeblatt-Vorderseite und den Führungselementen stets gleich, was einer stabilen Sägeblattführung förderlich ist. Ferner wird das Sägeblatt hinten nicht nur durch die übliche Pendelrolle, sondern auch durch die Abstützeinrichtung des Führungshalters abgestützt, was die Führungsstabilität weiter erhöht. Dabei stellt die Abstützeinrichtung sicher, dass der Führungshalter stets eine der momentanen Pendellage des Sägeblattes entsprechende Schwenklage einnimmt.

Die erfindungsgemäßen Maßnahmen sind verhältnismäßig einfach zu realisieren, sodass auch eine kostengünstige Lösung vorliegt.

Eine besonders vorteilhafte Maßnahme besteht darin, dass die beiden Führungselemente jeweils von einem Exzenterelement gebildet werden, das um eine zur Längsrichtung des Sägeblattes parallele Exzenterachse verdrehbar am Führungshalter gelagert und durch eine Federeinrichtung so belastet ist, dass das Verdrehen des jeweiligen Exzenterelements im Sinne einer Vergrößerung des Abstandes zwischen den beiden Exzenterelementen entgegen der Federkraft erfolgt. Auf diese Weise passen sich die Führungselemente von selbst an die Dicke des jeweils verwendeten Sägeblattes an, sodass der Benutzer keine weiteren Manipulationen zur Einstellung der Führungselemente vornehmen muss. Die Führungselemente werden unabhängig von der Dicke des Sägeblattes durch die Federkraft fest gegen das Sägeblatt gehalten.

Die beiden Exzenterelemente sind zweckmäßigerweise so orientiert, dass sie bei fehlendem Sägeblatt einen Einsteckspalt zum Einstecken des Sägeblattes mit seiner Rückseite voran begrenzen, wobei sich der Einsteckspalt beim Verdrehen der Exzenterelemente in der Einsteckrichtung des Sägeblattes entsprechender Drehrichtung entgegen der Federkräfte verbreitert. Bei der Montage des Sägeblattes wird dieses von vorne her einfach zwischen die beiden Exzenterelemente gedrückt, die dabei entgegen den auf sie ausgeübten Federkräften zur Seite hin ausweichen. Zum Entfernen des Sägeblattes wird dieses einfach nach vorne herausgezogen.

Aufgrund der parallelen Ausrichtung der Exzenterachse zur Längsrichtung des Sägeblattes können die Exzenterelemente praktisch beliebig lang ausgebildet werden, sodass sich eine entsprechend großflächige seitliche Führung des Sägeblattes ergibt. In diesem Zusammenhang können die beiden Exzenterelemente jeweils mindestens zwei mit axialem Abstand zueinander angeordnete Einzelexzenterglieder aufweisen, die durch ein verdrehbar am Führungselement gelagertes Exzenterachsglied fest miteinander verbunden sind.

Weitere zweckmäßige Ausgestaltungen der Erfindung sind in den Unteransprüchen angegeben.

Nachstehend wird ein Ausführungsbeispiel der Erfindung anhand der Zeichnung im Einzelnen erläutert. Es zeigen:

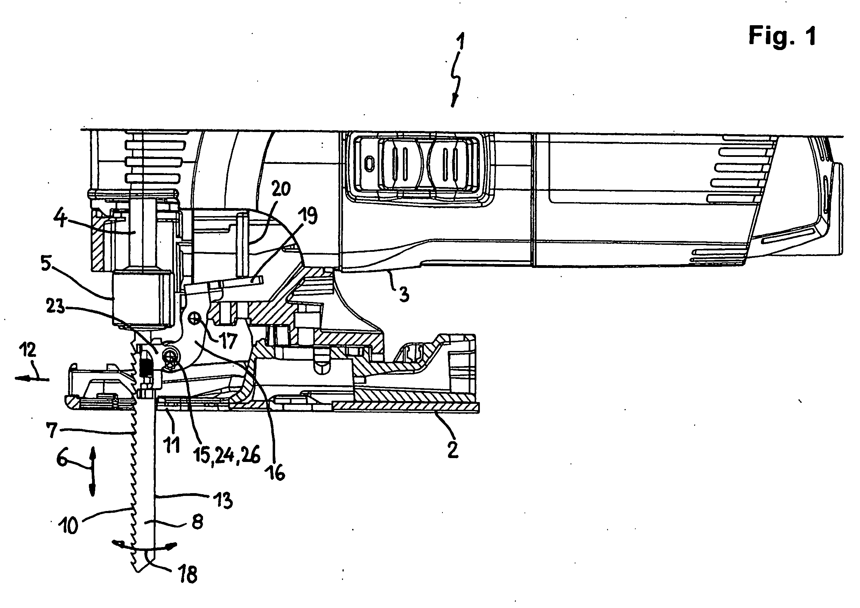

- Figur 1: eine erfindungsgemäße Hubsäge in Gestalt einer Stichsäge in abgeschnittener Seitenansicht, wobei der vorliegend interessierende Bereich im Längsschnitt gezeigt ist,

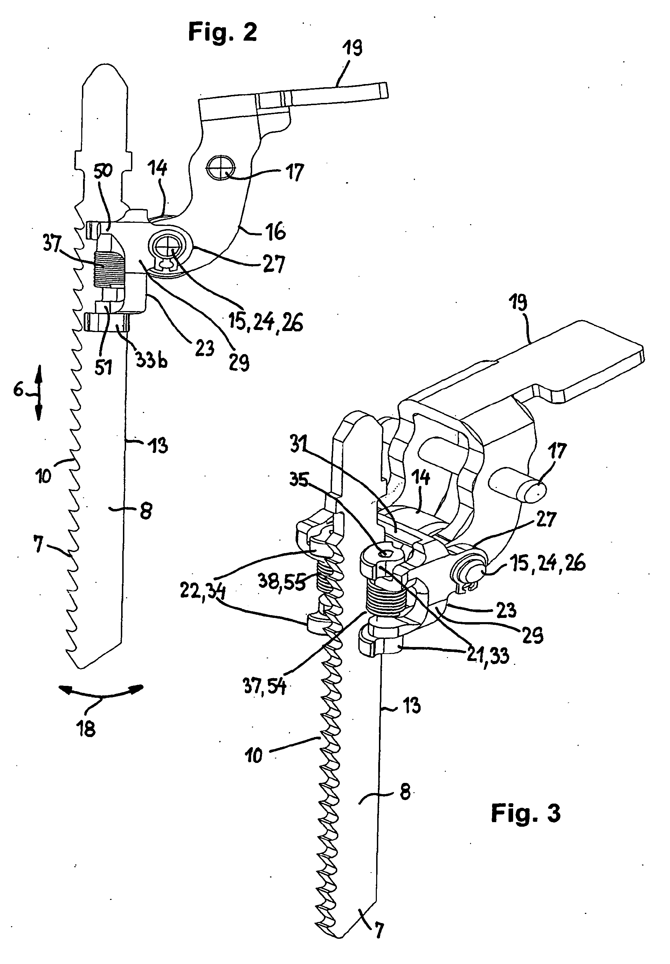

- Figur 2: das Sägeblatt mit dem Pendelrollenhalter und dem Führungshalter in gesonderter Darstellung in Seitenansicht,
- Figur 3: die Anordnung nach Figur 2 in Schrägansicht,
- Figur 4: den Führungshalter in gesonderter Darstellung in Schrägansicht von vorne gesehen,

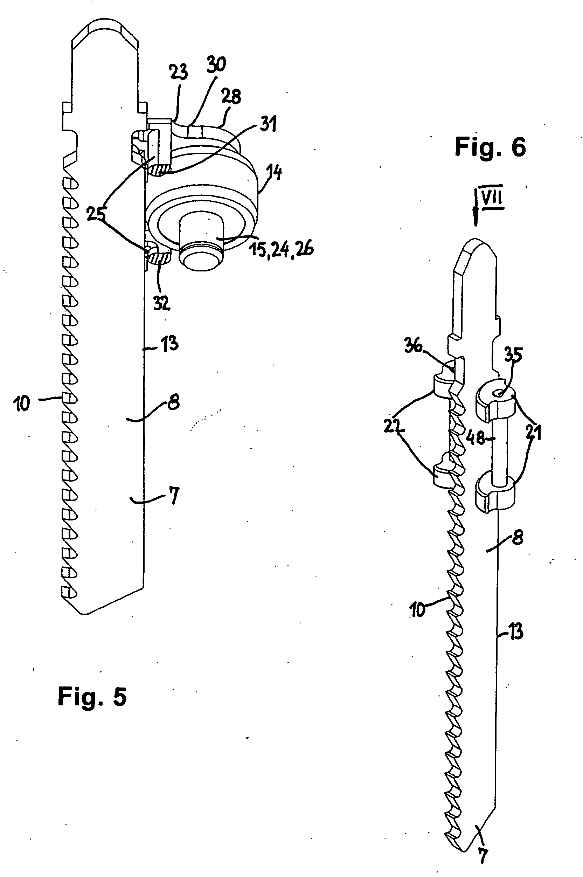

- Figur 5: die Pendelrolle zusammen mit dem geschnitten dargestellten Führungshalter und dem Sägeblatt in seitlicher Schrägansicht,
- Figur 6: die beiden die Führungselemente bildenden Exzenterelemente (ohne den sonstigen Führungshalter) und das zwischen den beiden Exzenterelementen angeordnete Sägeblatt in Schrägansicht und
- Figuren 7 bis 9: jeweils die Anordnung nach Figur 6 mit unterschiedlich dickem Sägeblatt in Stirnansicht gemäß Pfeil VII in Figur 6.

Die aus der Zeichnung hervorgehende Stichsäge 1 weist einen Sägetisch 2 auf, mit dem die Stichsäge auf das zu sägende Werkstück (nicht dargestellt) aufgelegt wird. Die Stichsäge 1 besitzt ferner oberhalb des Sägetisches 2 eine Antriebseinheit 3, die in üblicher Weise einen Antriebsmotor und ein Getriebe enthält, über das beim Betrieb eine Hubstange 4 mit einem Sägeblatthalter 5 zu einer periodisch hin und her gehenden Hubbewegung in Richtung gemäß Doppelpfeil 6 angetrieben wird. Der Sägeblatthalter 5 dient zum auswechselbaren Befestigen eines die Hubbewegung mitmachenden und den Sägeschnitt ausführenden Sägeblattes 7, das eine längliche Gestalt mit zwei zueinander parallelen Seitenflächen aufweist und an seiner Vorderseite 10 zur sägenden Bearbeitung des Werkstücks ausgebildet ist und hierzu, wie dargestellt, eine Sägezahnreihe trägt.

Die Stichsäge 1 ist als Handgerät ausgebildet und kann vom Benutzer am Gehäuse der Antriebseinheit 3 ergriffen werden.

Das Sägeblatt 7 ist am vorderen Endbereich der Stichsäge 1 angeordnet und wird, wie bereits erwähnt, mit seinem oberen Endbereich vom Sägeblatthalter 5 gehalten. Das Sägeblatt 7 erstreckt sich von der Antriebseinheit 3 im Wesentlichen rechtwinkelig zum Sägetisch 2 nach unten bis unterhalb des Sägetisches 2, der im Bereich des Sägeblattes 7 eine nach vorne hin offene Tischausnehmung 11 für den Durchtritt des Sägeblattes 7 enthält. Schiebt man die Stichsäge 1 über das betreffende Werkstück in Vorschubrichtung 12 nach vorne, sägt das auf und ab gehende Sägeblatt 7 einen Schlitz in das Werkstück.

Die Antriebseinheit 3 ist auf den Sägetisch 2 aufgesetzt und dabei um die Vorschubrichtung 12 verschwenkbar und in der jeweiligen Schwenkstellung feststellbar. Die Antriebseinheit 3 und mit dieser das Sägeblatt 7 können somit nach der einen oder andere Seite hin verschwenkt werden, sodass das Sägeblatt 7 schräg zum Werkstück ausgerichtet ist und an diesem einen entsprechenden Schrägschnitt, beispielsweise einen Gehrungsschnitt, anbringt. Weitere Einzelheiten dieser Verschwenkbarkeit der Antriebseinheit 3 interessieren vorliegend nicht.

Das Sägeblatt 7 stützt sich mit seiner der Vorderseite 10 entgegengesetzten Rückseite 13 an einer um eine Rollenachse 15 drehbar gelagerten Pendelrolle 14 ab, die an einem Pendelrollenhalter 16 angeordnet ist, der um eine Pendelachse 17 pendelnd gelagert ist und beim Betrieb synchron zur Hubbewegung des Sägeblattes 7 zu einer Pendelbewegung angetrieben wird, sodass die Pendelrolle 14 pendelnd auf die Sägeblatt-Rückseite 13 einwirkt und der Hubbewegung 6 des Sägeblattes 7 eine Pendelkomponente gemäß Doppelpfeil 18 überlagert wird. In diesem Zusammenhang wird noch darauf hingewiesen, dass die Hubstange 4 der Pendelbewegung entsprechend gelenkig gelagert ist. Außerdem wird die Hubstange 4 und über diese das Sägeblatt 7 durch eine gegen die Pendelrolle 14 gerichtete Federkraft beaufschlagt.

Die Rollenachse 15 und die Pendelachse 17 sind parallel zueinander und verlaufen quer zum Sägeblatt 7 an diesem vorbei.

Der Pendelrollenhalter 16 weist einen der Pendelrolle 14 mit Bezug auf die Pendelachse 17 entgegengesetzten Hebelarm 19 auf, auf den ein Stößel 20 einwirkt, dessen Auf- und Abbewegung synchron mit der Hubbewegung 6 der Hubstange 4 erfolgt.

Um zu vermeiden, dass das Sägeblatt 7 aufgrund der beim Sägevorgang vom Werkstück ausgeübten Kräfte seitlich ausweicht, ist den beiden Seitenflächen 8, 9 des Sägeblattes 7 jeweils ein Führungselement 21, 22 zugeordnet. Durch die an den beiden Seitenflächen 8, 9 des Sägeblattes 7 anliegenden Führungselemente 21, 22 erhält man eine seitliche Führung des Sägeblattes 7 und somit eine Stabilisierung des Sägeblattes 7 in Querrichtung. Die Führungselemente 21, 22 befinden sich etwa in Höhe des Sägetisches 2 und im auf das Werkstück aufgesetzten Zustand nur wenig oberhalb des Werkstücks.

Die beiden Führungselemente 21, 22 sind an einem Führungshalter 23 angeordnet, der um eine zur Pendelachse 17 parallele Schwenkachse 24 schwenkbar gelagert ist. Der Führungshalter 23 bildet eine der Sägeblatt-Rückseite 13 zugeordnete und beim Betrieb an dieser anliegende Abstützeinrichtung 25, sodass der Führungshalter 23 unter Beibehaltung seiner Ausrichtung relativ zum Sägeblatt 7 eine der Pendelkomponenten 18 der Hubbewegung des Sägeblattes 7 entsprechende, hin und her schwenkende Schwenkbewegung ausführt.

Die Schwenkachse 24 ist am Pendelrollenhalter 16 angeordnet. Dabei verläuft sie zweckmäßigerweise koaxial zur Rollenachse 15 der Pendelrolle 14, sodass die Schwenkachse 24 des Führungshalters 23 und die Rollenachse 15 der Pendelrolle 14 - wie beim dargestellten Ausführungsbeispiel vorgesehen - von einer gemeinsamen Lagerachse 26 gebildet werden können.

Der Führungshalter 23 weist zwei die Pendelrolle 14 seitlich übergreifende Lagerpartien 27, 28 auf, sodass die Pendelrolle 14 zwischen den beiden Lagerpartien 27, 28 angeordnet ist. Der Führungshalter 23 ist mit seinen Lagerpartien 27, 28 auf der gemeinsamen Lagerachse 26 gelagert.

Eine weitere zweckmäßige Maßnahme besteht darin, dass der Führungshalter 23 in axialer Richtung der ihn lagernden Schwenkachse 24 bewegbar angeordnet ist, sodass er sich stets von selbst auf das Sägeblatt 7 ausrichten kann.

Die Schwenkachse 24 des Führungshalters 23 könnte prinzipiell auch an anderer Stelle als koaxial zur Pendelrollenachse 15 angeordnet sein. Die Lagerung der Pendelrolle 14 und des Führungshalters 23 auf der gemeinsamen Lagerachse 26 ist jedoch platzsparend und kostengünstig.

Der Führungshalter 23 weist zwei jeweils eines der Führungselemente 21, 22 haltende Seitenpartien 29, 30 auf, die das Sägeblatt 7 seitlich übergreifen. Ferner wird die an der Sägeblatt-Rückseite 13 anliegende Abstützeinrichtung 25 von zwei in Längsrichtung des Sägeblattes 7 mit Abstand zueinander angeordneten, die beiden Seitenpartien 29, 30 miteinander verbindenden Abstützstegen 31, 32 des Führungshalters 23 gebildet. Prinzipiell könnte auch nur ein Abstützsteg vorhanden sein, der in Längsrichtung des Sägeblattes 7 eine solche Erstreckung hat, dass der Führungshalter 23 durch seine Anlage am Sägeblatt 7 stets zum Sägeblatt 7 ausgerichtet bleibt.

Der Führungshalter 23 liegt mit seiner Abstützeinrichtung 25 in Längsrichtung des Sägeblattes 7 beiderseits der Schwenkachse 24 des Führungshalters 23 an der Sägeblatt-Rückseite 13 an.

Aus der Zeichnung geht ferner hervor, dass die Lagerpartien 27, 28, mit denen der Führungshalter 23 auf seiner Schwenkachse 24 gelagert ist, an den Seitenpartien 29, 30 des Führungshaltes 23 angeordnet sind.

Die beiden Führungselemente 21, 22 werden jeweils von einem Exzenterelement 33, 34 gebildet, das um eine zur Längsrichtung des Sägeblattes 7 parallele Exzenterachse 35, 36 (gemeint ist hier die Exzenterachslinie) verdrehbar am Führungshalter 23 gelagert und durch eine Federeinrichtung 37, 38 so belastet ist, dass sich die jeweilige Federkraft beim Verdrehen des betreffenden Exzenterelements 33, 34 im Sinne einer Vergrößerung des Abstandes zwischen den beiden Exzenterelementen 33, 34 vergrößert. Auf diese Weise werden die beiden Exzenterelemente 33, 34 bei eingesetztem Sägeblatt 7 durch die Federeinrichtungen 37, 38 gegen die Seitenflächen 8, 9 des Sägeblattes 7 gedrückt.

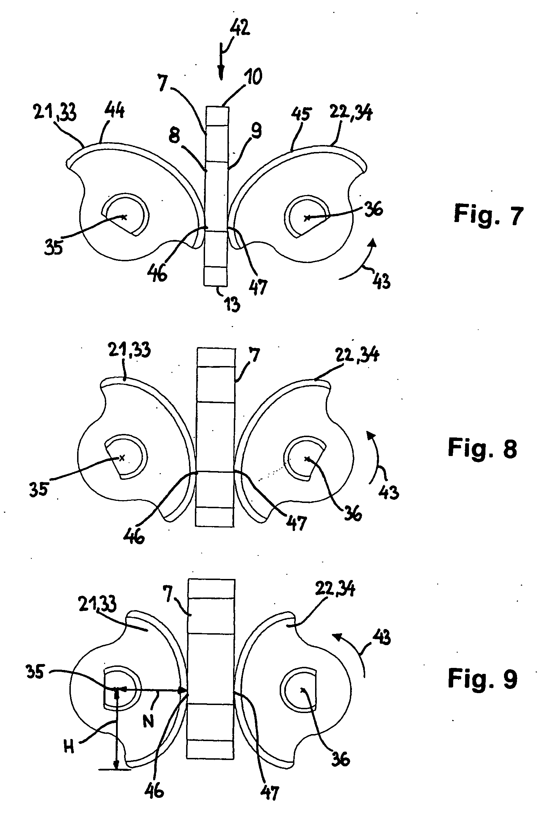

Bei weggenommenem Sägeblatt 7 können die beiden Exzenterelemente 33, 34 jeweils an einem Anschlag 39, 40 des Führungshalters 23 anliegen, sodass sich die Exzenterelemente 33, 34 mit Abstand gegenüberliegen und einen Einsteckspalt 41 zum Einstecken des Sägeblattes 7 begrenzen. Der Einsteckspalt 41 ist schmäler als das dünnste der zur Anwendung kommenden Sägeblätter. Das Einstecken des jeweiligen Sägeblattes 7 erfolgt von vorne her in Richtung gemäß Pfeil 42 (siehe Figur 7) mit der Sägeblatt-Rückseite 13 voran. Trifft die Sägeblatt-Rückseite 13 gegen die beiden Exzenterelemente 33, 34, verdrehen sich die Exzenterelemente 33, 34 in der Einsteckrichtung 42 des Sägeblattes 7 entsprechender Drehrichtung 43 entgegen der durch die Federeinrichtungen 37, 38 ausgeübten Federkräfte, sodass sich der Einsteckspalt 41 bis auf die Dicke des jeweiligen Sägeblattes 7 verbreitert.

Zum Entnehmen des Sägeblattes 7 zieht man dieses nach vorne heraus. Das Sägeblatt 7 rutscht dabei an den Exzenterelementen 33, 34 vorbei.

Es versteht sich, dass die beiden Exzenterelemente 33, 34 jeweils eine exzentrisch zur jeweiligen Exzenterachse 35, 36 verlaufende Umfangsfläche 44, 45 aufweisen, mit der sie am Sägeblatt 7 anliegen. In den Figuren 7, 8 und 9 befinden sich unterschiedlich dicke Sägeblätter 7 zwischen den beiden Exzenterelementen 33, 34. Dabei befinden sich die Exzenterelemente 33, 34 in Abhängigkeit von der Sägeblattdicke in einer unterschiedlichen Drehlage, sodass sie je nach der Sägeblattdicke mit einer anderen Stelle 46, 47 ihrer Umfangsfläche 44, 45 am betreffenden Sägeblatt 7 anliegen. Dabei sollte die Verbindungslinie zwischen der jeweiligen Exzenterachse 35, 36 und der betreffenden Umfangsstelle 46, 47 bei jeder Sägeblattdicke möglichst nahe einem Winkel von 90° zur Sägeblatt-Seitenfläche 8, 9 verlaufen. Hierzu ist zweckmäßigerweise vorgesehen, dass die Umfangsflächen 44, 45 der Exzenterelemente 33, 34 jeweils im Wesentlichen einer Ellipse entsprechen, wobei das Verhältnis zwischen der Länge N der Ellipsen-Nebenachse und der Länge H der Ellipsen-Hauptachse kleiner als 0,8 ist. Dies ergibt einen guten Kompromiss für alle in Frage kommenden Sägeblattdicken.

Die beiden Exzenterelemente 33, 34 können in Längsrichtung des Sägeblattes 7 beliebig lang ausgebildet werden, sodass das Sägeblatt 7 über eine entsprechend große Länge hinweg von den Exzenterelementen 33, 34 geführt wird. Es ist jedoch keine über die Länge durchgehende exzentrische Umfangsfläche 44, 45 erforderlich. In diesem Zusammenhang ist zweckmäßigerweise vorgesehen, dass die beiden Exzenterelemente 33, 34 jeweils von zwei - prinzipiell könnten es auch mehr als zwei sein - mit axialem Abstand, das heißt in Richtung der Exzenterachse 35, 36, zueinander angeordneten Einzelexzentergliedern 33a, 33b beziehungsweise 34a, 34b gebildet werden, die durch ein verdrehbar am Führungshalter 23 gelagertes Exzenterachsglied 48, 49 fest, zweckmäßigerweise einstückig, miteinander verbunden sind.

Der Führungshalter 23 weist in axialer Richtung neben jedem Einzelexzenterglied 33a, 33b, 34a, 34b einen Lagerarm 50, 51, 52, 53 auf, sodass jedes Exzenterachsglied 48, 49 an zwei der Lagerarme 50, 51 beziehungsweise 52, 53 drehbar gelagert ist.

Dabei sind die beiden jeweiligen Lagerarme 50, 51 beziehungsweise 52, 53 mit axialem Abstand zueinander angeordnet.

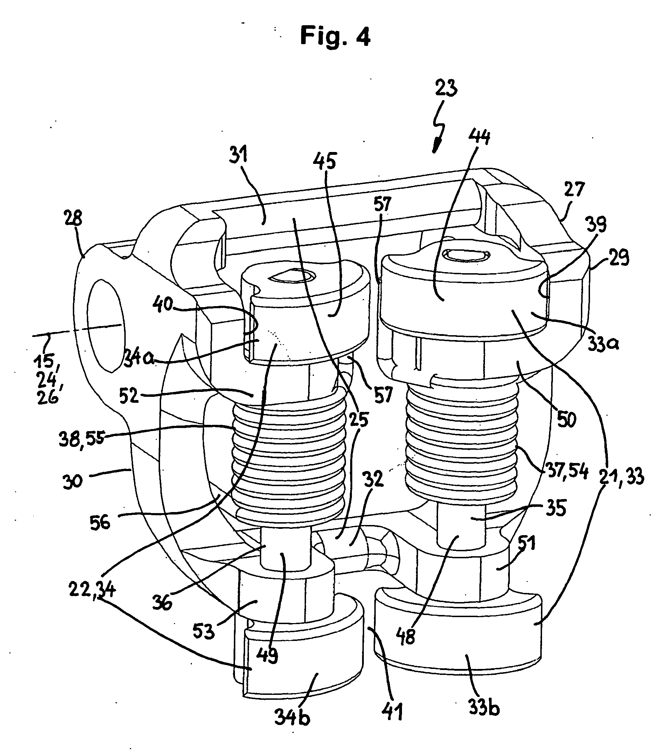

Die beiden jeweils ein Exzenterelement 33, 34 belastenden Federeinrichtungen 37, 38 werden zweckmäßigerweise von einer koaxial zur Exzenterachse 35, 36 des betreffenden Exzenterelements 33, 34 angeordneten Torsionsschraubenfeder 54, 55 gebildet, die sich einerseits am Führungshalter 23 und andererseits am jeweiligen Exzenterelement 33, 34 abstützt. Insbesondere aus Figur 4 ist ersichtlich, dass das jeweilige eine Federende 56 an einer feststehenden Fläche des Führungshalters 23 und das jeweilige andere Federende 57 am zugewandten Einzelexzenterglied 33a beziehungsweise 34a anliegt.

Die beiden Torsionsschraubenfedern 54, 55 sind jeweils zwischen den beiden Lagerarmen 50, 51 beziehungsweise 52, 53 angeordnet und werden vom betreffenden Exzenterachsglied 48 beziehungsweise 49 durchgriffen.

## Patentansprüche

1. Hubsäge, insbesondere Stichsäge, mit einer Antriebseinrichtung zum Antreiben eines Sägeblattes (7) länglicher Gestalt, das zwei zueinander parallele Seitenflächen (8) aufweist und an seiner Vorderseite (10) zur sägenden Bearbeitung eines Werkstücks ausgebildet ist, zu einer hin und her gehenden Hubbewegung, einer der Sägeblatt-Rückseite (13) zugeordneten Pendelrolle (14), die an einem um eine Pendelachse pendelnd gelagerten und beim Betrieb eine Pendelbewegung ausführenden Pendelrollenhalter (16) angeordnet ist, sodass das Sägeblatt (7) eine Hubbewegung mit überlagerter Pendelkomponente ausführt, und zwei den beiden Seitenflächen des Sägeblattes zugeordneten Führungselementen (21, 22) zur seitlichen Führung des Sägeblattes (7), **dadurch gekennzeichnet, dass** die Führungselemente (21, 22) an einem um eine zur Pendelachse (17) parallele Schwenkachse (24) schwenkbar gelagerten Führungshalter (23) angeordnet sind, der eine der Sägeblatt-Rückseite (13) zugeordnete und beim Betrieb an dieser anliegende Abstützeinrichtung (25) bildet, sodass der Führungshalter (23) unter Beibehaltung seiner Ausrichtung relativ zum Sägeblatt (7) eine der Pendelkomponenten der Hubbewegung des Sägeblattes (7) entsprechende, hin und her schwenkende Schwenkbewegung ausführt.

2. Hubsäge nach Anspruch 1, **dadurch gekennzeichnet, dass** die Schwenkachse (24) des Führungshalters (23) am Pendelrollenhalter (16) angeordnet ist.

3. Hubsäge nach Anspruch 2, **dadurch gekennzeichnet, dass** die Schwenkachse (24) des Führungshalters (23) koaxial zur Rollenachse (15) der Pendelrolle (14) angeordnet ist.

4. Hubsäge nach Anspruch 3, **dadurch gekennzeichnet, dass** die Schwenkachse (24) des Führungshalters (23) und die Rollenachse (15) der Pendelrolle (14) von einer gemeinsamen Lagerachse (26) gebildet werden.

5. Hubsäge nach Anspruch 4, **dadurch gekennzeichnet, dass** der Führungshalter (23) zwei die Pendelrolle (14) seitlich übergreifende Lagerpartien (27, 28) aufweist, sodass die Pendelrolle (14) zwischen den beiden Lagerpartien (27, 28) angeordnet ist, wobei der Führungshalter (23) mit seinen Lagerpartien (27, 28) auf der gemeinsamen Lagerachse (26) gelagert ist.

6. Hubsäge nach einem der Ansprüche 1 bis 5, **dadurch gekennzeichnet, dass** der Führungshalter (23) in axialer Richtung der ihn lagernden Schwenkachse (24) bewegbar angeordnet ist.

7. Hubsäge nach einem der Ansprüche 1 bis 6, **dadurch gekennzeichnet, dass** der Führungshalter (23) zwei jeweils eines der Führungselemente (21, 22) haltende Seitenpartien (29, 30) aufweist und die Abstützeinrichtung (25) von mindestens einem die beiden Seitenpartien (29, 30) verbindenden Abstützsteg (31, 32) des Führungshalters (23) gebildet wird.

8. Hubsäge nach Anspruch 7, **dadurch gekennzeichnet, dass** die Abstützeinrichtung (25) von zwei in Längsrichtung des Sägeblattes (7) mit Abstand zueinander angeordneten Abstützstegen (31, 32) gebildet wird.

9. Hubsäge nach einem der Ansprüche 1 bis 8, **dadurch gekennzeichnet, dass** der Führungshalter (23) in Längsrichtung des Sägeblattes (7) beiderseits der Schwenkachse (24) an der Sägeblatt-Rückseite (13) anliegt.

10. Hubsäge nach Anspruch 5 und einem der Ansprüche 7 bis 9, **dadurch gekennzeichnet, dass** die Lagerpartien (27, 28) an den Seitenpartien (29, 30) des Führungshalters (23) angeordnet sind.

11. Hubsäge nach einem der Ansprüche 1 bis 10, **dadurch gekennzeichnet, dass** die beiden Führungselemente (21, 22) jeweils von einem Exzenterelement (33, 34) gebildet werden, das um eine zur Längsrichtung des Sägeblattes (7) parallele Exzenterachse (35, 36) verdrehbar am Führungshalter (23) gelagert und durch eine Federeinrichtung (37, 38) so belastet ist, dass das Verdrehen des jeweiligen Exzenterelements (33, 34) im Sinne einer Vergrößerung des Abstandes zwischen den beiden Exzenterelementen (33, 34) entgegen der Federkraft erfolgt.

12. Hubsäge nach Anspruch 11, **dadurch gekennzeichnet, dass** die beiden Exzenterelemente (33, 34) jeweils mindestens zwei mit axialem Abstand zueinander angeordnete Einzelexzenterglieder (33a, 33b, 34a, 34b) aufweisen.

13. Hubsäge nach Anspruch 12, **dadurch gekennzeichnet, dass** die Einzelexzenterglieder (33a, 33b beziehungsweise 34a, 34b) durch ein verdrehbar am Führungshalter (23) gelagertes Exzenterachsglied (48 beziehungsweise 49) fest miteinander verbunden sind.

14. Hubsäge nach einem der Ansprüche 11 bis 13, **dadurch gekennzeichnet, dass** die beiden Exzenterelemente (33, 34) einen Einsteckspalt zum Einstecken des Sägeblattes (7) mit seiner Rückseite (13) voran begrenzen, wobei sich der Einsteckspalt beim Verdrehen der Exzenterelemente (33, 34) in der Einsteckrichtung (42) des Sägeblattes (7) entsprechender Drehrichtung (43) entgegen der Federkräfte verbreitert.

15. Hubsäge nach einem der Ansprüche 11 bis 14, **dadurch gekennzeichnet, dass** die jeweilige Federeinrichtung (37, 38) von einer koaxial zur Exzenterachse (35, 36) des betreffenden Exzenterelements (33, 34) angeordneten Torsionsschraubenfeder (54, 55) gebildet wird, die sich einerseits am Führungshalter (23) und andererseits am Exzenterelement (33, 34) abstützt.

16. Hubsäge nach einem der Ansprüche 1 bis 15, **dadurch gekennzeichnet, dass** die beiden Exzenterelemente (33, 34) jeweils eine im Wesentlichen einer Ellipse entsprechende Umfangsfläche (44, 45) aufweisen, wobei das Verhältnis Nebenachsenlänge (N) zu Hauptachsenlänge (H) der Ellipse kleiner als 0,8 ist.

## Claims

1. Hacksaw, in particular a jigsaw, with drive means for driving an elongated saw blade (7), which has two parallel side faces (8) and on its front (10) is designed for the sawing of a workpiece, to make a to-and-fro stroke, also a reciprocating roller (14) assigned to the saw blade rear (13) and mounted on a reciprocating roller mount (16) floating around a reciprocating axis and executing a reciprocating movement in operation, so that the saw blade (7) makes a stroke with superimposed reciprocating component, and with two guide elements (21, 22) assigned to the two side faces of the saw blade, for side guidance of the saw blade (7), **characterised in that** the guide elements (21, 22) are located on a guide holder (23) mounted pivotably around a pivot axis (24) parallel to the reciprocating axis (17) and which forms a support fixture (25) assigned to the saw blade rear (13) and fitting up against the latter in operation so that the guide holder (23), while maintaining its alignment relative to the saw blade (7), executes a to-and-fro pivoting movement corresponding to the reciprocating components of the stroke of the saw blade (7).

2. Hacksaw according to claim 1, **characterised in that** the pivot axis (24) of the guide holder (23) is located on the reciprocating roller mount (16).

3. Hacksaw according to claim 2, **characterised in that** the pivot axis (24) of the guide holder (23) is arranged coaxially to the roller axis (15) of the reciprocating roller (14).

4. Hacksaw according to claim 3, **characterised in that** the pivot axis (24) of the guide holder (23) and the roller axis (15) of the reciprocating roller (14) are formed by a common bearing axis (26).

5. Hacksaw according to claim 4, **characterised in that** the guide holder (23) has two bearing sections (27, 28) overlapping the reciprocating roller (14) at the side, so that the reciprocating roller (14) is located between the two bearing sections (27, 28), while the guide holder (23) is mounted by its bearing sections (27, 28) on the common bearing axis (26).

6. Hacksaw according to any of claims 1 to 5, **characterised in that** the guide holder (23) is mounted movably in the axial direction of the pivot axis (24) supporting it.

7. Hacksaw according to any of claims 1 to 6, **characterised in that** the guide holder (23) has two side sections (29, 30) each holding one of the guide elements (21, 22), and the support fixture (25) is formed by at least one support web (31, 32) of the guide holder (23) connecting the two side sections (29, 30).

8. Hacksaw according to claim 7, **characterised in that** the support fixture (25) is formed by two support webs (31, 32) spaced apart from one another in the axial direction of the saw blade (7).

9. Hacksaw according to any of claims 1 to 8, **characterised in that** the guide holder (23) fits up against the saw blade rear (13) in the axial direction of the saw blade (7), either side of the pivot axis (24).

10. Hacksaw according to claim 5 and any of claims 7 to 9, **characterised in that** the bearing sections (27, 28) are located on the side sections (29, 30) of the guide holder (23).

11. Hacksaw according to any of claims 1 to 10, **characterised in that** each of the two guide elements (21, 22) is formed by an eccentric element (33, 34) mounted rotatably on the guide holder (23) around an eccentric axis (35, 36) parallel to the axial direction of the saw blade (7) and biased by a spring device (37, 38) so that rotation of the respective eccentric element (33, 34) is effected for the purpose of increasing the distance between the two eccentric elements (33, 34) against the spring force.

12. Hacksaw according to claim 11, **characterised in that** each of the two eccentric elements (33, 34) has at least two individual eccentric members (33a, 33b, 34a, 34b) arranged with axial clearance from one another.

13. Hacksaw according to claim 12, **characterised in that** the individual eccentric members (33a, 33b and 34a, 34b respectively) are firmly connected to one another by an eccentric axis member (48 or 49) mounted rotatably on the guide holder (23).

14. Hacksaw according to any of claims 11 to 13, **characterised in that** the two eccentric elements (33, 34) bound an insertion gap for insertion of the saw blade (7) with its saw blade rear (13) leading, wherein the insertion gap is enlarged by rotating the eccentric elements (33, 34) in the direction of rotation (43) corresponding to the direction of insertion (42) of the saw blade (7), against the spring forces.

15. Hacksaw according to any of claims 11 to 14, **characterised in that** the respective spring device (37, 38) is formed by a torsion coil spring (54, 55) mounted coaxially to the eccentric axis (35, 36) of the relevant eccentric element (33, 34), and resting at one end on the guide holder (23) and at the other end on the eccentric element (33, 34).

16. Hacksaw according to any of claims 1 to 15, **characterised in that** each of the two eccentric elements (33, 34) has a peripheral surface (44, 45) corresponding substantially to an ellipse, wherein the ratio of the secondary axis length (N) to the main axis length (H) of the ellipse is less than 0.8.

## Revendications

1. Scie à mouvement alternatif, en particulier, scie sauteuse, comportant un dispositif d'entraînement servant à entraîner une lame de scie (7) de configuration allongée, qui présente deux surfaces latérales (8) parallèles l'une par rapport à l'autre et qui est réalisée au niveau de son côté avant (10) servant à l'usinage par sciage d'une pièce à usiner aux fins d'un mouvement de levage de va-et-vient, comportant un cylindre pendulaire (14) associé au côté arrière de la lame de scie (13), lequel est disposé sur un support de cylindre pendulaire (16) monté en palier oscillant autour d'un axe d'oscillation et réalisant un mouvement pendulaire en fonctionnement, de sorte que la lame de scie (7) réalise un mouvement de levage avec un composant pendulaire monté au-dessus, et comportant deux éléments de guidage (21, 22), associés aux deux surfaces latérales de la lame de scie, servant au guidage latéral de la lame de scie (7), **caractérisée en ce que** les éléments de guidage (21, 22) sont disposés sur un support de guidage (23) monté de manière à pouvoir pivoter autour d'un axe de pivotement (24) parallèle par rapport à l'axe d'oscillation (17), lequel support de guidage forme un dispositif d'appui (25) associé au côté arrière de la lame de scie (13) et reposant sur cette dernière en fonctionnement, de telle sorte que le support de guidage (23) réalise un mouvement de pivotement de va-et-vient correspondant au mouvement de levage des composants pendulaires de la lame de scie (7) tout en maintenant son orientation par rapport à la lame de scie (7).

2. Scie à mouvement alternatif selon la revendication 1, **caractérisée en ce que** l'axe de pivotement (24) du support de guidage (23) est disposé au niveau du support de cylindre pendulaire (16).

3. Scie à mouvement alternatif selon la revendication 2, **caractérisée en ce que** l'axe de pivotement (24) du support de guidage (23) est disposé de manière coaxiale par rapport à l'axe de cylindre (15) du cylindre pendulaire (14).

4. Scie à mouvement alternatif selon la revendication 3, **caractérisée en ce que** l'axe de pivotement (24) du support de guidage (23) et l'axe de cylindre (15) du cylindre pendulaire (14) sont formés par un axe de palier (26) commun.

5. Scie à mouvement alternatif selon la revendication 4, **caractérisée en ce que** le support de guidage (23) présente deux parties de palier (27, 28) recouvrant latéralement le cylindre pendulaire (14), de telle sorte que le cylindre pendulaire (14) est disposé entre les deux parties de palier (27, 28) sachant que le support de guidage (23) est monté par ses parties de palier (27, 28) sur l'axe de palier (26) commun.

6. Scie à mouvement alternatif selon l'une quelconque des revendications 1 à 5, **caractérisée en ce que** le support de guidage (23) est disposé de manière à pouvoir être déplacé dans la direction axiale de l'axe de pivotement (24) logeant celui-ci.

7. Scie à mouvement alternatif selon l'une quelconque des revendications 1 à 6, **caractérisée en ce que** le support de guidage (23) présente deux parties latérales (29, 30) supportant respectivement un des éléments de guidage (21, 22), et **en ce que** le dispositif d'appui (25) est formé par au moins une traverse d'appui (31, 32) du support de guidage (23), reliant les deux parties latérales (29, 30).

8. Scie à mouvement alternatif selon la revendication 7, **caractérisée en ce que** le dispositif d'appui (25) est formé par deux traverses d'appui (31, 32) disposées à distance l'une de l'autre dans la direction longitudinale de la lame de scie (7).

9. Scie à mouvement alternatif selon l'une quelconque des revendications 1 à 8, **caractérisée en ce que** le support de guidage (23) repose sur le côté arrière de la lame de scie (13) dans la direction longitudinale de la lame de scie (7) des deux côtés de l'axe de pivotement (24).

10. Scie à mouvement alternatif selon la revendication 5, ou selon l'une quelconque des revendications 7 à 9, **caractérisée en ce que** les parties de palier (27, 28) sont disposées au niveau des parties latérales (29, 30) du support de guidage (23).

11. Scie à mouvement alternatif selon l'une quelconque des revendications 1 à 10, **caractérisée en ce que** les deux éléments de guidage (21, 22) sont formés respectivement par un élément excentrique (33, 34), qui est monté au niveau du support de guidage (23) de manière à pouvoir subir une torsion autour d'un axe excentrique (35, 36) parallèle par rapport à la direction longitudinale de la lame de scie (7) et qui est chargé de telle manière par un dispositif à ressort (37, 38) qu'il se produit une torsion de chaque élément excentrique (33, 34) à l'encontre de la force de ressort au sens d'un agrandissement de l'écart entre les deux éléments excentriques (33, 34).

12. Scie à mouvement alternatif selon la revendication 11, **caractérisée en ce que** les deux éléments excentriques (33, 34) présentent respectivement au moins deux organes excentriques individuels (33a, 33b, 34a, 34b) disposés de manière axialement espacée l'un par rapport à l'autre.

13. Scie à mouvement alternatif selon la revendication 12, **caractérisée en ce que** les organes excentriques individuels (33a, 33b ou 34a, 34b) sont reliés les uns aux autres de manière fixe par un organe d'axe excentrique (48 ou 49) monté de manière à pouvoir subir une torsion sur le support de guidage (23).

14. Scie à mouvement alternatif selon l'une quelconque des revendications 11 à 13, **caractérisée en ce que** les deux éléments excentriques (33, 34) délimitent à l'avant un interstice d'insertion servant à insérer la lame de scie (7) par son côté arrière (13), sachant que l'interstice d'insertion s'élargit à l'encontre des forces de ressort lors de la torsion des éléments excentriques (33, 34) dans la direction de rotation (43) correspondant à la direction d'insertion (42) de la lame de scie (7).

15. Scie à mouvement alternatif selon l'une quelconque des revendications 11 à 14, **caractérisée en ce que** le dispositif à ressort (37, 38) respectif est formé par un ressort cylindrique de torsion (54, 55) disposé de manière coaxiale par rapport à l'axe excentrique (35, 36) de l'élément excentrique (33, 34) concerné, lequel ressort cylindrique de torsion s'appuie d'un côté au niveau du support de guidage (23) et de l'autre côté au niveau de l'élément excentrique (33, 34).

16. Scie à mouvement alternatif selon l'une quelconque des revendications 1 à 15, **caractérisée en ce que** les deux éléments excentriques (33, 34) présentent respectivement une surface périphérique (44, 45) correspondant essentiellement à une ellipse, sachant que le rapport de la longueur d'axe secondaire (N) sur la longueur d'axe principal (H) de l'ellipse est inférieur à 0,8.
